# EUROPÄISCHE PATENTSCHRIFT

(11) **EP 2 524 535 B1**
(45) Veröffentlichungstag und Bekanntmachung des Hinweises auf die Patenterteilung: **02.03.2016**
(21) Anmeldenummer: 10796270.6
(22) Anmeldetag: 07.12.2010
(51) Int. Cl.: H04W 24/06, H04W 88/04

(54) **VERFAHREN UND SYSTEM ZUR VERMESSUNG VON MOBILSTATIONEN IN KOMMUNIKATIONSNETZWERKEN MIT VIRTUELLEN ANTENNENARRAYS**
METHOD AND SYSTEM FOR MEASURING MOBILE STATIONS IN COMMUNICATION NETWORKS BY MEANS OF VIRTUAL ANTENNA ARRAYS
PROCÉDÉ ET SYSTÈME POUR LE RELEVÉ DE STATIONS MOBILES DANS DES RÉSEAUX DE COMMUNICATION À L'AIDE DE RÉSEAUX D'ANTENNES VIRTUELS

(30) Priorität: 22.03.2010 DE 102010012285; 14.01.2010 DE 102010004575
(43) Veröffentlichungstag der Anmeldung: 21.11.2012
(73) Patentinhaber: Rohde & Schwarz GmbH & Co. KG, 81671 München (DE)
(72) Erfinder: SCHUMACHER, Adrian, 81541 München (DE)
(74) Vertreter: Körfer, Thomas
(86) Internationale Anmeldenummer: PCT/EP2010/007436
(87) Internationale Veröffentlichungsnummer: WO 2011/085759

(56) Entgegenhaltungen:
- GB-A- 2 440 190
- US-A1- 2007 002 763
- US-A1- 2007 160 014
- US-A1- 2008 003 948
- US-A1- 2008 274 692
- US-A1- 2009 116 419
- US-B2- 7 594 010

## Beschreibung

Die Erfindung betrifft ein Messverfahren und ein Messsystem zur Vermessung von Mobilstationen in Kommunikationsnetzwerken, welche virtuelle Antennenarrays beinhalten, wie im anhängenden Anspruchssatz definiert.

In herkömmlichen Kommunikationsnetzwerken besteht eine direkte Kommunikationsverbindung zwischen einer Basisstation und einer Mobilstation. Zur Verbesserung der Übertragungsbedingungen ist weiterhin die Nutzung von Mehrwegeausbreitung (Diversity) bekannt. Im MIMO-Kommunikationssystem werden auf der Sendeseite und auf der Empfangsseite mehrere Antennen eingesetzt. Die mehreren Antennen sind jedoch jeweils mit einem einzelnen Gerät, z.B. der Basisstation oder der Mobilstation, verbunden. Zur Verbesserung der Übertragungsqualität bzw. zur Erhöhung der Reichweite ist weiterhin der Einsatz von Relay-Stationen bekannt. Dabei wird beispielsweise eine Basisstation mit einer Relaystation verbunden, welche wiederum mit einer Mobilstation verbunden ist.

Nachteilhaft an den geschilderten Kommunikationssystemen ist jedoch, dass die Reichweite und die Übertragungsqualität von der Verbreitung fest installierter Komponenten, z.B. Basisstationen oder Relaystationen, abhängt.

In der jüngeren Vergangenheit wurden darüber hinaus virtuelle Antennenarrays entwickelt. Ein virtuelles Antennenarray besteht dabei aus einer Mehrzahl von unabhängigen mobilen Teilnehmern, welche zu einem Netzwerk zusammengeschaltet sind. Dabei nimmt jeder einzelne der Teilnehmer die Funktion einer Antenne in einem MIMO-Kommunikationsnetzwerk ein. So kann in einem solchen Kommunikationsnetzwerk eine Verbindung von einer Basisstation zu einer Mobilstation über ein solches virtuelles Antennenarray geleitet werden. Die Basisstation sendet ein Signal an sämtliche zu einem virtuellen Antennenarray verbundenen Teilnehmer. Die Teilnehmer des virtuellen Antennenarrays setzen das Signal um und senden jeweils ein Signal aus, welches von der Ziel-Mobilstation empfangen wird. Bei den einzelnen Teilnehmern des virtuellen Antennenarrays handelt es sich um herkömmliche Mobilstationen, welche sich in Nutzerhand befinden. So kann eine nennenswerte Erhöhung der Reichweite der Basisstation erzielt werden, ohne dass hierfür fest installierte Kommunikationsnetzwerk-Komponenten benötigt werden.

So zeigt die US 7,594,010 B2 ein solches virtuelles Antennenarray. US 2007/0160014 lehrt eine Vorrichtung und ein Verfahren, um ein kabelloses Netzwerk mit Relay-Stationen auszugestalten. Obwohl jedoch virtuelle Antennenarrays seit der jüngeren Vergangenheit bekannt sind, existiert noch keine Messtechnik, um die Teilnehmer eines virtuellen Antennenarrays und die mit einem virtuellen Antennenarray verbundenen Basisstationen und Mobilstationen zu vermessen.

Der Erfindung liegt somit die Aufgabe zu Grunde, ein Messsystem und ein Messverfahren zu schaffen, welche es erlauben, Bestandteile eines virtuellen Antennenarrays und mit einem virtuellen Antennenarray verbundene Teilnehmer zu vermessen.

Die Aufgabe wird erfindungsgemäß für das System durch die Merkmale des unabhängigen Anspruchs 1 und für das Verfahren durch die Merkmale des unabhängigen Anspruchs 7 gelöst. Vorteilhafte Weiterbildungen sind Gegenstand der hierauf rückbezogenen Unteransprüche.

Ein erfindungsgemäßes Messsystem zur Vermessung eines Messobjekts verfügt über einen ersten Teilnehmer, einen zweiten Teilnehmer, ein erstes virtuelles Antennenarray und eine Verarbeitungseinrichtung. Das Messobjekt ist dabei eine Mobilstation. Das erste virtuelle Antennenarray besteht zumindest aus zwei Mobilstationen. Das erste virtuelle Antennenarray beinhaltet dabei das Messobjekt. Das Messobjekt ist dabei bevorzugt eine der zumindest zwei Mobilstationen. Alternativ kann es als weitere Mobilstation Teil des virtuellen Antennenarrays sein. Der erste Teilnehmer ist dabei derart angeordnet, dass er Signale an das erste virtuelle Antennenarray sendet. Das erste virtuelle Antennenarray ist dabei derart angeordnet, dass es zumindest mittelbar Signale an den zweiten Teilnehmer sendet. Die Verarbeitungseinrichtung ist dabei derart ausgelegt, dass sie an das Messobjekt gesendete und von dem Messobjekt gesendete Signale vergleicht. So ist eine zuverlässige Überprüfung der Funktionalität des Messobjekts als Teil eines virtuellen Antennenarrays möglich.

Der erste Teilnehmer ist bevorzugt eine Basisstation, während der zweite Teilnehmer bevorzugt eine Mobilstation ist. Alternativ ist der erste Teilnehmer bevorzugt eine Mobilstation während der zweite Teilnehmer eine Basisstation ist. So ist eine Überprüfung der Tauglichkeit des Messobjekts zur Kommunikation mit einer Basisstation wie auch mit einer Mobilstation möglich.

Das erste virtuelle Antennenarray ist vorteilhafterweise mit einem zweiten virtuellen Antennenarray verbunden. Das erste virtuelle Antennenarray ist dabei vorteilhafterweise derart angeordnet, dass es Signale an das zweite virtuelle Antennenarray sendet. Das zweite virtuelle Antennenarray ist dabei vorteilhafterweise derart angeordnet, dass es Signale an den zweiten Teilnehmer sendet. So kann die Tauglichkeit des Messobjekts zur Kommunikation mit einem zweiten virtuellen Antennenarray überprüft werden.

Das erste virtuelle Antennenarray und/oder das zweite virtuelle Antennenarray sind dabei bevorzugt derart ausgestaltet, dass eine bestehende Kommunikationsverbindung von einem virtuellen Antennenarray oder einem Teilnehmer zu dem Messobjekt an ein weiteres virtuelles Antennenarray oder einen weiteren Teilnehmer übergeben werden kann. Die Verarbeitungseinrichtung misst bevorzugt das Verhalten des Messobjekts während der Übergabe. So ist eine Überprüfung der Fähigkeit des Messobjekts zur korrekten Verbindungsübergabe möglich.

Das Messsystem beinhaltet weiterhin zumindest eine Kanalsimulations-Einrichtung. Die Kanalsimulations-Einrichtung simuliert bevorzugt zumindest auf einer Signalübertragungsstrecke zwischen zwei Teilnehmern oder zwischen einem virtuellen Antennenarray und einem Teilnehmer oder zwischen zwei virtuellen Antennenarrays einen zumindest teilweise realen Übertragungskanal. So ist eine Überprüfung der Funktionalität des Messobjekts unter realen Übertragungsbedingungen möglich.

Das Messobjekt wird bevorzugt während einer bestehenden Kommunikationsverbindung von einem Bestandteil des ersten virtuellen Antennenarrays zu einer Mobilstation oder Basisstation, welche nicht Bestandteil eines virtuellen Antennenarrays ist, rekonfiguriert. Die Verarbeitungseinrichtung misst bevorzugt während der Rekonfiguration das Verhalten des Messobjekts. So ist eine Überprüfung der korrekten Rekonfigurierbarkeit des Messobjekts möglich.

Das Messobjekt verfügt bevorzugt über zumindest zwei Antennen. Das Messobjekt sendet oder empfängt bevorzugt mittels seiner zumindest zweier Antennen identische oder unterschiedliche Signale. Die Steuereinrichtung überprüft bevorzugt den Empfang oder das Senden der Signale. So ist eine Vermessung der Fähigkeit des Messobjekts zur Nutzung von Diversity möglich.

Das erfindungsgemäße Messsystem zur Vermessung eines Messobjekts verfügt über ein virtuelles Antennenarray und eine Verarbeitungseinrichtung. Das virtuelle Antennenarray besteht dabei aus zumindest zwei Mobilstationen. Das Messobjekt ist eine Mobilstation oder eine Basisstation. Das virtuelle Antennenarray ist dabei derart angeordnet, dass es Signale an das Messobjekt sendet und/oder Signale von dem Messobjekt empfängt. Die Verarbeitungseinrichtung ist dabei derart ausgelegt, dass sie an das Messobjekt gesendete und von dem Messobjekt gesendete Signale vergleicht. So ist eine Überprüfung der Fähigkeit des Messobjekts, mit einem virtuellen Antennenarray zu kommunizieren, möglich.

Das virtuelle Antennenarray ist dabei bevorzugt derart ausgestaltet, dass eine bestehende Kommunikationsverbindung von einem virtuellen Antennenarray oder einem Teilnehmer zu dem Messobjekt an ein weiteres virtuelles Antennenarray oder an einen weiteren Teilnehmer übergeben werden kann. Die Verarbeitungseinrichtung misst bevorzugt das Verhalten des Messobjekts während der Übergabe. So ist eine Überprüfung der Fähigkeit des Messobjekts zur korrekten Behandlung von Verbindungsübergaben möglich.

Das Messobjekt wird vorteilhafterweise während einer bestehenden Kommunikationsverbindung von einer Mobilstation oder Basisstation, welche nicht Bestandteil eines virtuellen Antennenarrays ist, zu einem Bestandteil eines virtuellen Antennenarrays rekonfiguriert. Die Verarbeitungseinrichtung misst bevorzugt das Verhalten des Messobjekts während der Rekonfiguration. So ist eine Überprüfung der Fähigkeit des Messobjekts zur korrekten Rekonfiguration möglich.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:
- Fig. 1: ein erstes beispielhaftes Kommunikationsnetzwerk;
- Fig. 2: ein zweites beispielhaftes Kommunikationsnetzwerk;
- Fig. 3: ein erstes Ausführungsbeispiel des erfindungsgemäßen Messsystems;
- Fig. 4: ein zweites Ausführungsbeispiel des erfindungsgemäßen Messsystems;
- Fig. 5: ein drittes Ausführungsbeispiel des erfindungsgemäßen Messsystems;
- Fig. 6: ein viertes Ausführungsbeispiel des erfindungsgemäßen Messsystems;
- Fig. 7: ein fünftes Ausführungsbeispiel des erfindungsgemäßen Messsystems, und
- Fig. 8: ein Ausführungsbeispiel des erfindungsgemäßen Messverfahrens.

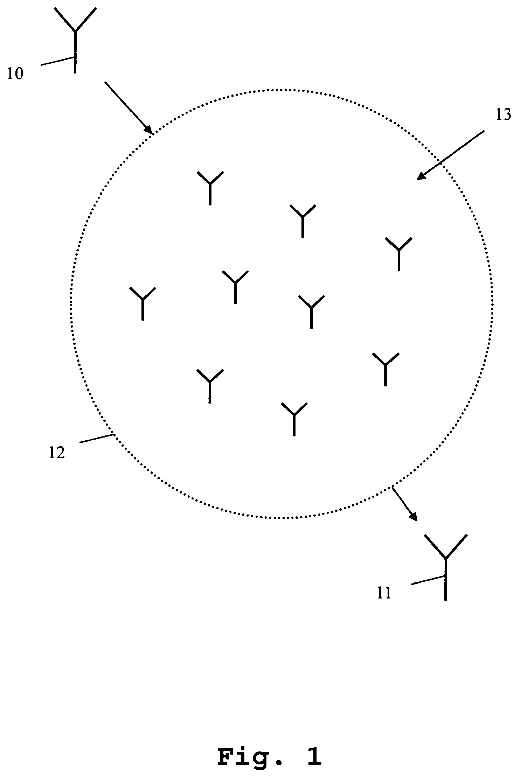

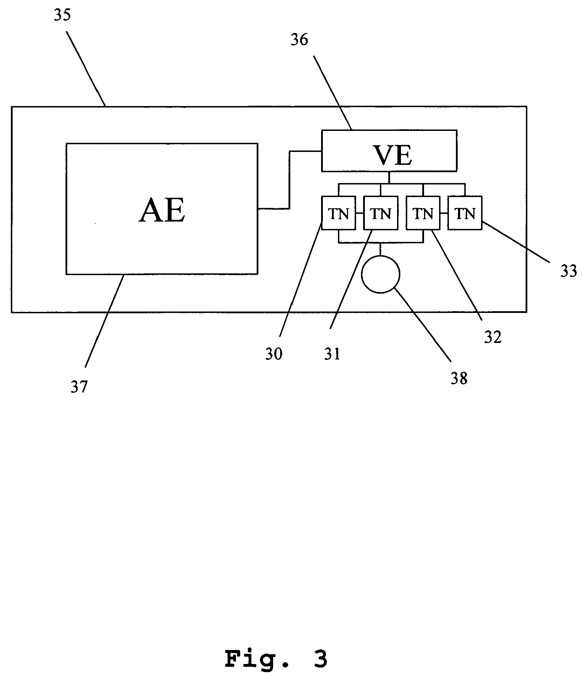

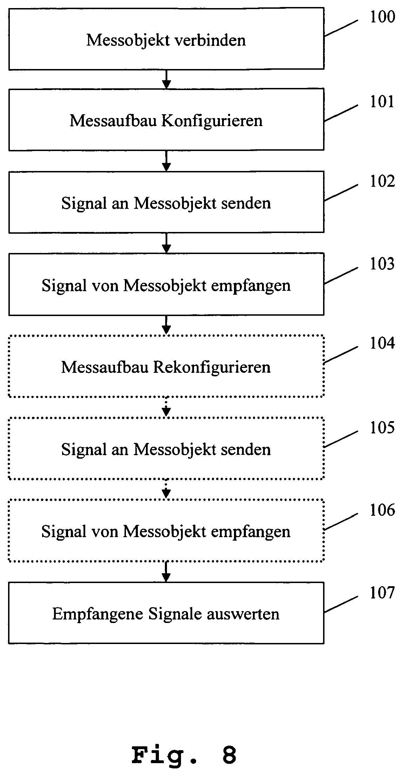

Zunächst wird anhand der Fig. 1 - 2 der Aufbau und die Funktionsweise eines Kommunikationsnetzwerkes, welches ein virtuelles Antennenarray beinhaltet, erläutert. Mittels Fig. 3 - 7 wird anschließend der Aufbau und die Funktionsweise verschiedener Ausführungsbeispiele des erfindungsgemäßen Messsystems bzw. der erfindungsgemäßen Messvorrichtung gezeigt. Abschließend wird anhand von Fig. 8 die Funktionsweise eines Ausführungsbeispiels des erfindungsgemäßen Messverfahrens dargestellt. Identische Elemente werden in ähnlichen Abbildungen zum Teil nicht wiederholt dargestellt und beschrieben.

Fig. 1 zeigt ein erstes beispielhaftes Kommunikationssystem. Eine Basisstation 10 strebt eine Kommunikationsverbindung zu einer Mobilstation 11 an. Die Basisstation 10 und die Mobilstation 11 befinden sich unter Umständen jedoch außerhalb ihrer gegenseitigen Reichweite. Um eine Kommunikationsverbindung herzustellen, stellt die Basisstation 10 eine Kommunikationsverbindung zu einem virtuellen Antennenarray 12 her. Das virtuelle Antennenarray 12 besteht dabei aus einer Mehrzahl von Mobilstationen 13. Das virtuelle Antennenarray 12 wiederum stellt eine Kommunikationsverbindung zu der Mobilstation 11 her.

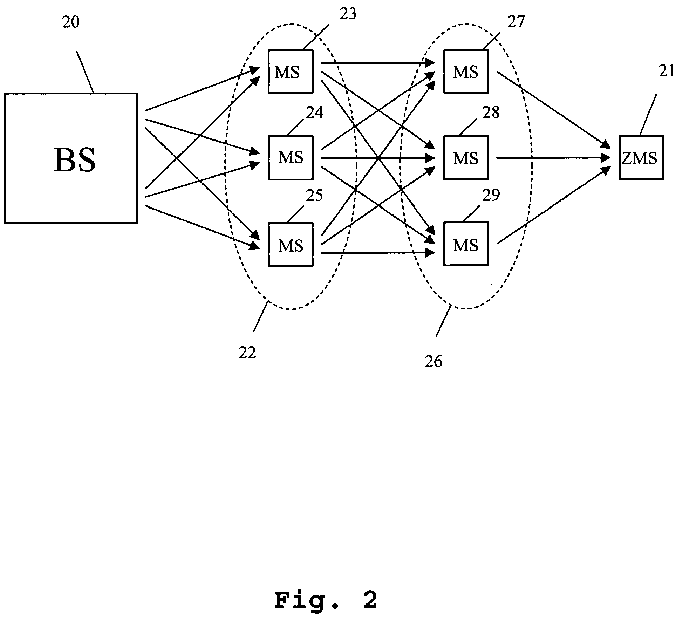

Die Nachrichten, welche zwischen der Basisstation 10 und der Mobilstation 11 ausgetauscht werden sollen, werden somit über das virtuelle Antennenarray 12 geleitet. Auf die Funktion des virtuellen Antennenarrays 12 wird anhand der Fig. 2 näher eingegangen.

Fig. 2 zeigt ein zweites beispielhaftes Kommunikationssystem. Eine Basisstation (BS) 20 strebt eine Verbindung zu einer Ziel-Mobilstation (MS) 21 an. Sie befinden sich jedoch nicht zwingend in ihrer gegenseitigen Reichweite. Um eine Nachricht an die Mobilstation 21 zu senden, sendet die Basisstation 20 Signale an ein erstes virtuelles Antennenarray 22. Die hier gezeigte Basisstation 20 verfügt dabei über zwei Sendeantennen und sendet somit zwei unterschiedliche Signale aus. Es handelt sich somit um eine MIMO-Basisstation. Alternativ kann jedoch auch eine Basisstation mit nur einer Antenne oder mehr als zwei Antennen eingesetzt werden.

Das erste virtuelle Antennenarray 22 besteht dabei aus einer Mehrzahl von Mobilstationen 23, 24, 25. Jede der Mobilstationen 23, 24, 25 empfängt dabei die beiden Signale von der Basisstation 20. Jede dieser Mobilstationen 23, 24, 25 kann wiederum eine oder mehrere Antennen aufweisen. In dem hier gezeigten Beispiel verfügt jede der Mobilstationen 23, 24, 25 über eine Antenne.

Da sich die Ziel-Mobilstation (ZMS) 21 ebenfalls nicht in Reichweite des ersten virtuellen Antennenarrays 22 befindet, überträgt das erste virtuelle Antennenarray 22 die Nachrichten an ein zweites virtuelles Antennenarray 26. Dieses zweite virtuelle Antennenarray 26 besteht erneut aus einer Mehrzahl von Mobilstationen 27, 28, 29. Auch diese Mobilstationen verfügen in diesem Beispiel über jeweils eine Antenne, können jedoch auch über zwei oder mehr Antennen verfügen.

Auch eine abweichende Anzahl von Mobilstationen ist möglich. Ab einer Anzahl von zwei Mobilstationen pro virtuellem Antennenarray ist eine Funktion möglich. Die einzelnen Mobilstationen 27, 28, 29 des zweiten virtuellen Antennenarrays 26 empfangen die Signale, setzen sie erneut um und senden sie an die Ziel-Mobilstation 21.

Auch eine Funktion in umgekehrter Senderichtung ist möglich. In diesem Fall sendet die Mobilstation 21 ein Signal an die Mobilstationen 27, 28, 29, welche zu dem virtuellen Antennenarray 26 zusammengefasst sind. Das virtuelle Antennenarray 26 sendet das Signal an das virtuelle Antennenarray 22, welches an die Basisstation 20 sendet. Die Reichweite der Basisstation 20 wird so signifikant erhöht, ohne weitere fest installierte Netzwerk-Komponenten zu erfordern.

In Fig. 3 wird ein erstes Ausführungsbeispiel des erfindungsgemäßen Messsystems gezeigt. Ein Messgerät 35 beinhaltet eine Verarbeitungseinrichtung 36, eine Anzeigeeinrichtung (AE) 37, einen Anschluss 38 und eine Mehrzahl von Teilnehmern 30 - 33. Die Verarbeitungseinrichtung (VE) 36 ist dabei mit der Anzeigeeinrichtung 37, dem Anschluss 38 und sämtlichen Teilnehmern (TN) 30 - 33 verbunden. Die Teilnehmer sind zum Teil mit dem Messobjekt und zum Teil miteinander verbunden. Die Teilnehmer bilden dabei das gesamte Kommunikationsnetzwerk ab, mit welchem das Messobjekt verbunden ist. Auf die genaue Verbindung der Teilnehmer wird anhand der folgenden Figuren näher eingegangen.

Das zu untersuchende Messobjekt wird an den Anschluss 38 angeschlossen. Die Verarbeitungseinrichtung 36 steuert die Teilnehmer 30 - 33 derart, dass diese Signale über den Anschluss 38 an das Messobjekt senden und von dem Messobjekt empfangen. Die Verarbeitungseinrichtung 36 vergleicht die von den Teilnehmern 30 - 33 an das Messobjekt gesendeten Signale mit den durch die Teilnehmer 30 - 33 von dem Messobjekt empfangenen Signalen.

Alternativ beinhaltet die Verarbeitungseinrichtung 36 sämtliche Komponenten des Kommunikationsnetzwerks, mit welchem das Messobjekt im realen Einsatz verbunden wäre. In diesem Fall sind die Teilnehmer 30 - 33 Teil der Verarbeitungseinrichtung.

Bei dem Messobjekt kann es sich dabei um einen zu einem virtuellen Antennenarray gehörenden Teilnehmer handeln. In diesem Fall beinhaltet das Kommunikationsnetzwerk die übrigen Teilnehmer des virtuellen Antennenarrays und zumindest zwei weitere, nicht zu dem virtuellen Antennenarray gehörige Teilnehmer. In diesem Fall wird die Fähigkeit des Messobjekts vermessen, als Teil eines virtuellen Antennenarrays zu arbeiten.

Alternativ handelt es sich bei dem Messobjekt um eine Mobilstation, welche nicht Teil des virtuellen Antennenarrays ist. In diesem Anwendungsfall wird die Fähigkeit des Messobjekts, mit virtuellen Antennenarrays zusammen zu arbeiten vermessen.

Auf die genaue Funktionsweise der Messung wird anhand der folgenden Figuren näher eingegangen. Das Ergebnis der Messungen wird von der Verarbeitungseinrichtung 36 auf der Anzeigeeinrichtung 37 dargestellt.

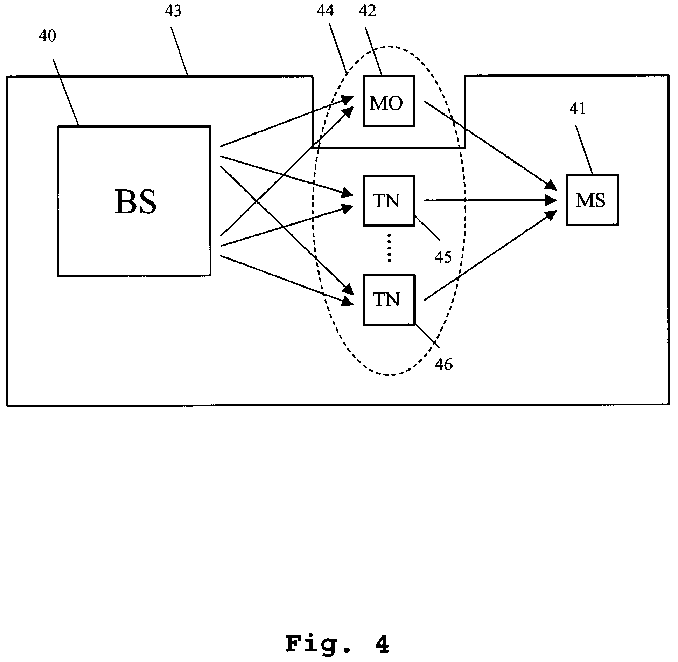

Fig. 4 zeigt ein zweites Ausführungsbeispiel des erfindungsgemäßen Messsystems. Hier wird der erste geschilderte Fall dargestellt. D.h. das Messobjekt (MO) 42 ist hier Teil eines virtuellen Antennenarrays 44. Das Messgerät 43 beinhaltet dabei eine Basisstation 40, eine Mobilstation 41 und mehrere weitere Teilnehmer 45, 46, welche Teil des virtuellen Antennenarrays 44 sind. Auch ein Einsatz auch nur eines weiteren Teilnehmers 45, welcher zu dem virtuellen Antennenarrays 44 gehört, ist denkbar. Das virtuelle Antennenarray 44 besteht dann lediglich aus zwei Teilnehmern. Die Teilnehmer 45, 46, die Basisstation 40 und die Mobilstation 41 entsprechen dabei der Mehrzahl der Teilnehmer 30 - 33 aus Fig. 3. Die Verarbeitungseinrichtung 36, die Anzeigeeinrichtung 37 und der Anschluss 38 aus Fig. 3 sind hier nicht dargestellt.

Die Basisstation 40 sendet mittels ihrer beiden Antennen Signale an die Teilnehmer 42, 45, 46 des virtuellen Antennenarrays 44. Das Messobjekt 42 und die Teilnehmer 45, 46 verarbeiten die Signale und senden sie an die Mobilstation 41 weiter. Die Mobilstation 41 empfängt die Signale. Die anhand von Fig. 3 erläuterte Verarbeitungseinrichtung vergleicht die von der Basisstation 40 an das Messobjekt ausgesendeten Signale mit den von der Mobilstation 41 empfangenen Signalen, welche von dem Messobjekt 42 ausgesendet wurden. Anhand dieses Vergleichs bestimmt die Verarbeitungseinrichtung zumindest ein Kriterium, anhand dessen die Tauglichkeit des Messobjekts 42 beurteilt wird. Auch die Bestimmung mehrerer Kriterien ist möglich. Zu diesen Kriterien gehören beispielsweise der Datendurchsatz, die Bitfehlerwahrscheinlichkeit oder die Latenzzeit. Weitere Kriterien können die Funktionsfähigkeit der Mehrwegeübertragung (MIMO) oder die Korrektheit des gesamten Signalstroms sein.

Um möglichst reale, jedoch definierte Übertragungsbedingungen auf den einzelnen Übertragungskanälen zwischen den einzelnen Teilnehmern zu erreichen, können optional zusätzlich Kanalsimulations-Einrichtungen eingesetzt werden. Eine solche wird jeweils zwischen die Teilnehmer geschaltet und simuliert einen realen Übertragungskanal. D.h. Fading und/oder Rauschen wird dem Signal hinzugefügt. Ein Einsatz auf nur einer Verbindung zwischen Teilnehmern oder auf mehreren Verbindungen oder auf sämtlichen Verbindungen ist möglich.

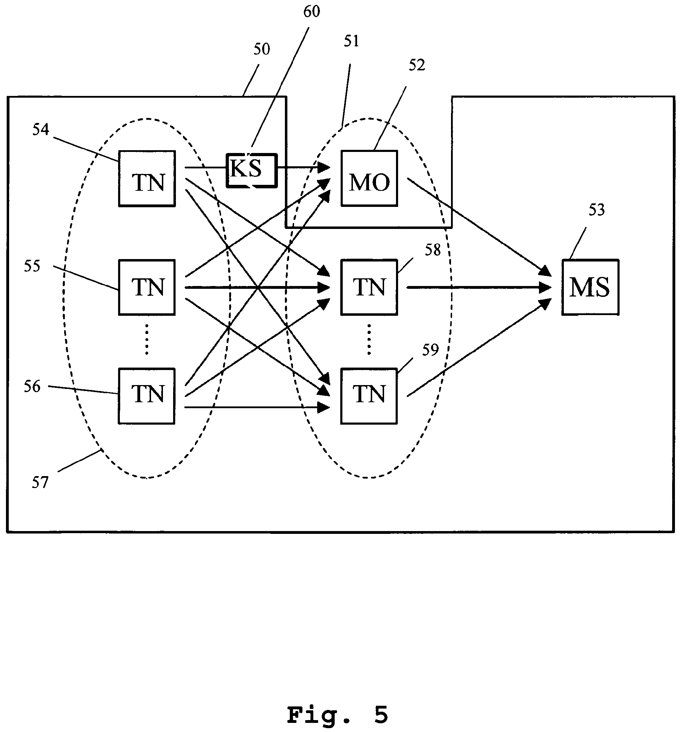

In Fig. 5 wird ein drittes Ausführungsbeispiel des erfindungsgemäßen Messsystems gezeigt. Das dritte Ausführungsbeispiel entspricht zum Teil dem zweiten Ausführungsbeispiel aus Fig. 4. Ein Messgerät 50 beinhaltet zum Teil ein erstes virtuelles Antennenarray 51, welches aus den Teilnehmern 58, 59 besteht. Teil dieses ersten virtuellen Antennenarrays 51 ist weiterhin das Messobjekt 52. Das Messgerät 50 beinhaltet weiterhin ein zweites virtuelles Antennenarray 57, welches die Teilnehmer 54, 55, 56 beinhaltet. Auch eine abweichende Teilnehmeranzahl der einzelnen virtuellen Antennenarrays 51, 57 ist möglich. Ab einer Teilnehmeranzahl von mehr als zwei Teilnehmern ist jeweils eine Funktion als virtuelles Antennenarray möglich.

In diesem Ausführungsbeispiel sendet statt einer Basisstation direkt das zweite virtuelle Antennenarray 57 Signale an das erste virtuelle Antennenarray 51. Dabei sendet jeder Teilnehmer 54, 55, 56 des zweiten virtuellen Antennenarrays 57 ein unabhängiges Signal aus. Die Teilnehmer 52, 58, 59 des ersten virtuellen Antennenarrays 51 empfangen die Signale und setzen diese um. Der Übertragungskanal von dem Teilnehmer 54 zu dem Messobjekt 52 wird dabei, wie anhand von Fig. 4 erläutert, von einer Kanalsimulations-Einrichtung (KS) 60 verändert. Die Signale werden von den Teilnehmern 52, 58, 59 erneut ausgesendet und von einer ebenfalls in dem Messgerät beinhalteten Mobilstation 53 empfangen. Die Teilnehmer 54, 55, 56, 58, 59 und 53 entsprechen dabei den Teilnehmern 30 - 33 aus Fig. 3. Die Verarbeitungseinrichtung 36, die Anzeigeeinrichtung 37 und der Anschluss 38 sind hier ebenfalls nicht dargestellt.

Die Verarbeitungseinrichtung, auf welche anhand von Fig. 3 näher eingegangen wird, vergleicht die von dem zweiten virtuellen Antennenarray 57 ausgesendeten Signale mit den von der Mobilstation 53 empfangenen Signalen. Anhand dieses Vergleichs wird zumindest ein Kriterium bestimmt, anhand dessen die Tauglichkeit des Messobjekts 52 als Teil des ersten virtuellen Antennenarrays 51 beurteilt wird. Wie bereits anhand von Fig. 4 erläutert, können auch mehrere solcher Kriterien eingesetzt werden.

Auch in diesem Ausführungsbeispiel wird die Fähigkeit des Messobjekts, als Teil eines virtuellen Antennenarrays zu arbeiten überprüft. Um möglichst reale, jedoch definierte Übertragungsbedingungen auf den einzelnen Übertragungskanälen zwischen den einzelnen Teilnehmern zu erreichen, können auch hier optional zusätzlich weitere Kanalsimulations-Einrichtungen eingesetzt werden. Es wird auf die Ausführungen zu Fig. 4 verwiesen.

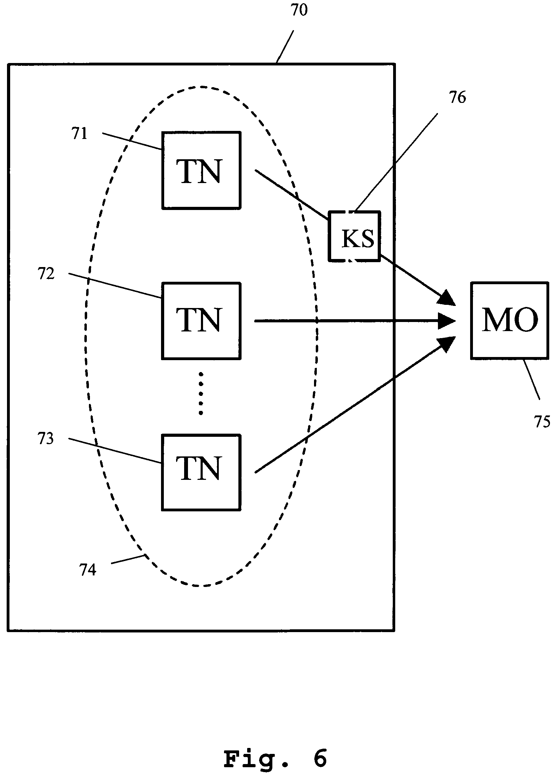

In Fig. 6 wird ein viertes Ausführungsbeispiel des erfindungsgemäßen Messystems gezeigt. In diesem Ausführungsbeispiel wird die Fähigkeit des Messobjekts, mit einem virtuellen Antennenarray zusammen zu arbeiten, überprüft. Ein Messgerät 70 beinhaltet ein erstes virtuelles Antennenarray 74, welches die Teilnehmer 71, 72, 73 beinhaltet. Auch eine abweichende Teilnehmeranzahl ab 2 Teilnehmern ist möglich. Die Teilnehmer 71, 72, 73 entsprechen dabei den Teilnehmern 30 - 33 aus Fig. 3. Die Verarbeitungseinrichtung 36, die Anzeigeeinrichtung 37 und der Anschluss 38 aus Fig. 3 sind auch hier nicht dargestellt.

Mit dem virtuellen Antennenarray 74 verbunden ist das Messobjekt 75. Es ist dabei im Gegensatz zu den bisherigen Ausführungsbeispielen nicht Teil des virtuellen Antennenarrays 74, sondern steht lediglich mit diesem in Kommunikationsverbindung. Bei dem Messobjekt 75 handelt es sich somit um die Zielmobilstation, welche unter Zuhilfenahme eines virtuellen Antennenarrays 74 erreicht wird. Alternativ kann es sich bei dem Messobjekt 75 um eine Basisstation handeln.

Um möglichst reale, jedoch definierte Übertragungsbedingungen zu erreichen, wird hier auf dem Übertragungskanal von dem Teilnehmer 71 zu dem Messobjekt 75 eine Kanalsimulations-Einrichtung 76 eingesetzt. Zu der Funktion der Kanalsimulations-Einrichtung 76 wird auf die Ausführungen zu Fig. 4 verwiesen. Optional können zusätzliche Kanalsimulations-Einrichtungen eingesetzt werden. Auch ein Ersatz mehrerer unabhängiger Kanalsimulations-Einrichtungen durch eine gemeinsame Kanalsimulations-Einrichtung, welche mehrere Signalpfade bearbeitet ist möglich.

Das virtuelle Antennenarray 74 steht mit dem Messobjekt 75 in Kommunikationsverbindung. Die Verarbeitungseinrichtung, auf welche anhand von Fig. 3 schon näher eingegangen wurde, vergleicht die von dem virtuellen Antennenarray 74 an das Messobjekt 75 ausgesendeten Signale mit Signalen, welche von dem Messobjekt 75 ausgesendet werden. Um dies zu erreichen, ist das Messobjekt 75 mittels einer zusätzlichen, hier nicht dargestellten Verbindung mit der Verarbeitungseinrichtung verbunden. Anhand dieses Vergleichs ermittelt die Verarbeitungseinrichtung zumindest ein Kriterium anhand dessen die Tauglichkeit des Messobjekts 75 beurteilt wird. Bezüglich der Ausgestaltung der Kriterien wird auf die Ausführungen zu Fig. 3 - 5 verwiesen.

Bei den bisher dargestellten Ausführungsbeispielen wurden jeweils statische Situationen vermessen. D.h. während der gesamten Messung bestehen Verbindungen zwischen denselben Teilnehmern. Im realen Anwendungsfall ist dies jedoch eine unrealistische Prämisse. Vielmehr können sich sämtliche beteiligten Teilnehmer im realen Anwendungsfall bewegen. Dabei ändern sich die Signalstärken und die Ausbreitungsbedingungen. Insbesondere kann dabei ein Verbindungsabriss zu einzelnen Teilnehmern erfolgen.

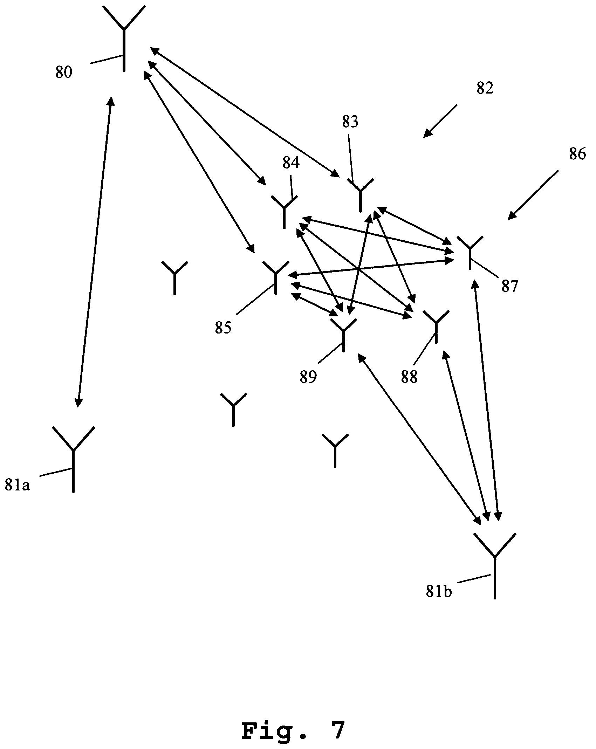

Anhand von Fig. 7 wird ein fünftes Ausführungsbeispiel der Erfindung gezeigt. Hier wird der Anwendungsfall einer Verbindungsübergabe berücksichtigt. Eine Basisstation 80 ist zunächst auf direktem Wege mit einer Mobilstation 81a verbunden. Während der Messung führt die Mobilstation 81a eine simulierte Bewegung durch und liegt nun als Mobilstation 81b außerhalb der Reichweite der Basisstation 80. Innerhalb der Reichweite der Mobilstation 81b und der Basisstation 80 befindet sich jedoch ein Kommunikationsnetzwerk 90, welches aus einer Vielzahl von einzelnen Teilnehmern 83, 84, 85, 87, 88, 89 gebildet wird. Mehrere dieser Teilnehmer 83, 84, 85 bilden dabei ein erstes virtuelles Antennenarray 82. Die Teilnehmer 87, 88, 89 bilden ein zweites virtuelles Antennenarray 86. Die Übertragung von der Basisstation 80 führt zunächst zu dem ersten virtuellen Antennenarray 82, weiter zu dem zweiten Antennenarray 86 und weiter zu der Mobilstation 81b. Während der Messung wird somit ein Wechsel von einer direkten Verbindung der Basisstation 80 zu der Mobilstation 81a zu einer Verbindung mit zwei Zwischenschritten über die beiden Antennenarrays 82, 86 zu der Mobilstation 81b durchgeführt.

Dabei kann das Messobjekt wie anhand von Fig. 3 - 6 gezeigt sowohl ein Teilnehmer 83, 84, 85, 87, 88, 89 eines der virtuellen Anntennenarrays 82, 86, wie auch lediglich ein damit verbundener Teilnehmer 80, 81a, 81b sein. Die übrigen Bestandteile des Kommunikationsnetzwerks werden dabei von dem Messgerät gebildet. Ist das Messobjekt ein Teilnehmer eines Antennenarrays, so kann unter anderem eine Verbindungsübergabe von einer Basisstation oder Mobilstation an das Antennenarray und eine Verbindungsübergabe in umgekehrter Richtung überprüft werden. Auch eine Verbindungsübergabe von einem virtuellen Antennenarray 82 zu einem weiteren virtuellen Antennenarray 86 kann überprüft werden.

Handelt es sich bei dem Messobjekt um eine Mobilstation, welche nicht Teil eines virtuellen Antennenarrays ist, so kann unter anderem eine Verbindungsübergabe von einer Basisstation zu einem virtuellen Antennenarray und eine Verbindungsübergabe in umgekehrter Richtung überprüft werden. Insbesondere kann dabei das Verhalten des Messobjekts bei der Rekonfiguration von einem Teilnehmer eines virtuellen Antennenarrays zu einem einer Mobilstation oder Basisstation, welche nicht Teil eines virtuellen Antennenarrays ist, überprüft werden. Das Messsystem in Fig. 7 kann dabei sowohl ein virtuelles Antennenarray wie auch mehrere virtuelle Antennenarrays beinhalten.

Fig. 8 zeigt ein Ausführungsbeispiel des erfindungsgemäßen Messverfahrens. In einem ersten Schritt 100 wird das Messobjekt mit dem Messaufbau verbunden. In einem zweiten Schritt 101 wird der Messaufbau konfiguriert. Dabei werden die einzelnen Komponenten des Kommunikationsnetzwerks, welche Signale an das Messobjekt senden und Signale von dem Messobjekt empfangen, miteinander verbunden und auf das Messobjekt abgestimmt. In einem dritten Schritt 102 werden Signale an das Messobjekt gesendet. In einem vierten Schritt 103 werden durch den Messaufbau Signale von dem Messobjekt empfangen.

In einem optionalen fünften Schritt 104 findet eine Rekonfiguration des Messaufbaus statt. Dieser Schritt wird durchgeführt, wenn eine Verbindungsübergabe, wie anhand von Fig. 7 beschrieben, überprüft werden soll. In einem optionalen sechsten Schritt 105 werden erneut Signale an das Messobjekt gesendet. In einem optionalen siebten Schritt 106 werden erneut Signale von dem Messobjekt empfangen.

In einem stets durchzuführenden achten Schritt 107 werden die empfangenen Signale mit den gesendeten Signalen verglichen und daraus Kriterien bestimmt, aus welchen die Tauglichkeit des Messobjekts abgelesen werden kann. Bezüglich der Kriterien wird auf die Ausführungen zu Fig. 4 verwiesen.

Die Erfindung ist dabei nicht auf das dargestellte Ausführungsbeispiel beschränkt. So können unterschiedliche Kommunikationsverfahren zwischen den einzelnen Teilnehmern eingesetzt werden. So kann nebeneinander GSM, UMTS, W-LAN, LTE, WiMax, etc. eingesetzt werden. Alle vorstehend beschriebenen Merkmale oder in den Figuren gezeigten Merkmale sind im Rahmen der Erfindung beliebig vorteilhaft miteinander kombinierbar.

## Patentansprüche

1. Messsystem zur Vermessung eines Messobjekts (42, 52) mit einem ersten Teilnehmer (40), einem zweiten Teilnehmer (41, 53), einem ersten virtuellen Antennenarray (44, 51) und einer Verarbeitungseinrichtung (36),
wobei das Messobjekt (42, 52) eine Mobilstation ist, wobei das erste virtuelle Antennenarray (44, 51) aus zumindest zwei Mobilstationen (44, 45, 46, 51, 58, 59) besteht,
wobei das erste virtuelle Antennenarray (44, 51) das Messobjekt (42, 52) beinhaltet,
wobei der erste Teilnehmer (40) derart angeordnet ist, dass er Signale an das erste virtuelle Antennenarray (44, 51) sendet,
wobei das erste virtuelle Antennenarray (44, 51) derart angeordnet ist, dass es zumindest mittelbar Signale an den zweiten Teilnehmer (41, 53) sendet, und
wobei die Verarbeitungseinrichtung (36) derart ausgebildet ist, dass sie an das Messobjekt (42, 52) gesendete und von dem Messobjekt (42, 52) gesendete Signale vergleicht
**dadurch gekennzeichnet,**
**dass** die Verarbeitungseinheit (36) ausgebildet ist Teilnehmer des virtuellen Antennenarrays (30, 31, 32, 33) zu steuern, dass diese Signale an das Messobjekt senden oder empfangen,
**dass** das Messsystem weiterhin zumindest eine Kanalsimulations-Einrichtung (60) beinhaltet, und
**dass** die Kanalsimulations-Einrichtung (60) zum Simulieren eines zumindest teilweise realen Übertragungskanals durch Hinzufügen von Rauschen und/oder Fading zumindest auf einer Signalübertragungsstrecke zwischen zwei Teilnehmern und/oder zwischen einem virtuellen Antennenarray und einem Teilnehmer und/oder zwischen zwei virtuellen Antennenarrays (51, 57) ausgebildet ist und ein Einsatz der Kanalsimulationseinrichtung (60) auf mehreren Verbindungen oder sämtlichen Verbindungen möglich ist.

2. Messsystem nach Anspruch 1,
**dadurch gekennzeichnet,**
**dass** der erste Teilnehmer (40) eine Basisstation ist und der zweite Teilnehmer (41, 53) eine Mobilstation ist, oder dass der erste Teilnehmer (40) eine Mobilstation ist und der zweite Teilnehmer (41, 53) eine Basisstation ist.

3. Messsystem nach Anspruch 1 oder 2,
**dadurch gekennzeichnet,**
**dass** das erste virtuelle Antennenarray (44, 51) mit einem zweiten virtuellen Antennenarray (57) verbunden ist,
**dass** das erste virtuelle Antennenarray (44, 51) derart angeordnet ist, dass es Signale an das zweite virtuelle Antennenarray (57) sendet, und
**dass** das zweite virtuelle Antennenarray (57) derart angeordnet ist, dass es Signale an den zweiten Teilnehmer (53) sendet.

4. Messsystem nach Anspruch 3,
**dadurch gekennzeichnet,**
**dass** das erste virtuelle Antennenarray (44, 51) und/oder das zweite virtuelle Antennenarray (57) derart ausgestaltet sind, dass eine bestehende Kommunikationsverbindung von einem virtuellen Antennenarray (44, 51, 57) oder einem Teilnehmer zu dem Messobjekt (42, 52) an ein weiteres virtuelles Antennenarray (44, 51, 57) oder einen weiteren Teilnehmer (40, 41, 53) übergeben werden kann, und
**dass** die Verarbeitungseinrichtung (36) das Verhalten des Messobjekts (42, 52) während der Übergabe misst.

5. Messsystem nach einem der Ansprüche 1 bis 4,
**dadurch gekennzeichnet,**
**dass** das Messobjekt während einer bestehenden Kommunikationsverbindung von einem Bestandteil des ersten virtuellen Antennenarrays zu einer Mobilstation oder Basisstation, welche nicht Bestandteil eines virtuellen Antennenarrays ist, rekonfigurierbar ist, und
**dass** die Verarbeitungseinrichtung (36) zum Messen des Verhaltens des Messobjekts während der Rekonfiguration geeignet ist.

6. Messsystem nach einem der Ansprüche 1 bis 5,
**dadurch gekennzeichnet,**
**dass** das Messobjekt über zumindest zwei Antennen zum Senden oder Empfangen identischer oder unterschiedlicher Signale verfügt,
und **dass** die Steuereinrichtung (36) zum Überprüfen des Empfangs oder des Sendens der Signale geeignet ist.

7. Messverfahren zur Vermessung eines Messobjekts (42, 52),
wobei das Messobjekt (42, 52) eine Mobilstation ist, wobei ein erstes virtuelles Antennenarray (44, 51) aus zumindest zwei Mobilstationen (45, 46, 58, 59) besteht, wobei das erste virtuelle Antennenarray (44, 51) das Messobjekt (42, 52) beinhaltet,
wobei Signale an das erste virtuelle Antennenarray (44, 51) gesendet werden,
wobei das erste virtuelle Antennenarray (44, 51) zumindest mittelbar Signale sendet, und
wobei an das Messobjekt (42, 52) gesendete und von dem Messobjekt (42, 52) gesendete Signale verglichen werden **dadurch gekennzeichnet,**
**dass** die Verarbeitungseinheit (36) Teilnehmer des virtuellen Antennenarrays (30, 31, 32, 33) steuert, dass diese Signale an das Messobjekt senden oder empfangen, dass zumindest auf einer Signalübertragungsstrecke zwischen zwei Teilnehmern und/oder zwischen einem virtuellen Antennenarray und einem Teilnehmer und/oder zwischen zwei virtuellen Antennenarrays (51, 57) ein zumindest teilweise realer Übertragungskanal simuliert wird durch Hinzufügen von Rauschen und/oder Fading und ein Einsatz einer Kanalsimulationseinrichtung (60) auf mehreren Verbindungen oder sämtlichen Verbindungen möglich ist.

8. Messverfahren nach Anspruch 7,
**dadurch gekennzeichnet,**
**dass** das erste virtuelle Antennenarray (44, 51) Signale an ein zweites virtuelles Antennenarray (57) sendet.

9. Messverfahren nach Anspruch 7 oder 8,
**dadurch gekennzeichnet,**
**dass** eine bestehende Kommunikationsverbindung von einem virtuellen Antennenarray oder einem Teilnehmer zu dem Messobjekt an ein weiteres virtuelles Antennenarray oder einen weiteren Teilnehmer übergeben wird, und
**dass** das Verhalten des Messobjekts während der Übergabe gemessen wird.

10. Messverfahren nach einem der Ansprüche 7 bis 9,
**dadurch gekennzeichnet,**
**dass** das Messobjekt während einer bestehenden Kommunikationsverbindung von einem Bestandteil des ersten virtuellen Antennenarrays zu einer Mobilstation oder Basisstation, welche nicht Bestandteil eines virtuellen Antennenarrays ist, rekonfiguriert wird, und
**dass** das Verhalten des Messobjekts während der Rekonfiguration gemessen wird.

11. Messverfahren nach einem der Ansprüche 7 bis 10,
**dadurch gekennzeichnet,**
**dass** das Messobjekt über zumindest zwei Antennen verfügt, dass mittels der zumindest zwei Antennen des Messobjekts identische oder unterschiedliche Signale empfangen oder gesendet werden, und
**dass** der Empfang oder das Senden der Signale überprüft wird.

## Claims

1. Measuring system for measuring an object to be measured (42, 52) with a first party (40), a second party (41, 53), a first virtual antenna array (44, 51) and a processing device (36),
wherein the object to be measured (42, 52) is a mobile station,
wherein the first virtual antenna array (44, 51) consists of at least two mobile stations (44, 45, 46, 51, 58, 59), wherein the first virtual antenna array (44, 51) comprises the object to be measured (42, 52),
wherein the first party (40) is arranged in such a way that it transmits signals to the first virtual antenna array (44, 51),
wherein the first virtual antenna array (44, 51) is arranged in such a way that it transmits signals to the second party (41, 53) at least indirectly, and
wherein the processing device (36) is configured in such a way that it compares signals transmitted to the object to be measured (42, 52) and signals transmitted from the object to be measured (42, 52),
**characterised in that**
the processing unit (36) is configured to control parties of the virtual antenna array (30, 31, 32, 33) so that these transmit signals to or receive signals from the object to be measured,
**in that** the measuring system also comprises at least one channel simulation device (60), and
**in that** the channel simulation device (60) is configured to simulate an at least partially real transmission channel by adding noise and/or fading at least on a signal transmission path between two parties and/or between a virtual antenna array and a party and/or two virtual antenna arrays (51, 57), and
**in that** the channel simulation device (60) can be used on a plurality of connections or all the connections.

2. Measuring system according to claim 1,
**characterised in that**
the first party (40) is a base station and the second party (41, 53) is a mobile station, or
**in that** the first party (40) is a mobile station and the second party (41, 53) is a base station.

3. Measuring system according to claim 1 or 2,
**characterised in that**
the first virtual antenna array (44, 51) is connected with a second virtual antenna array (57),
**in that** the first virtual antenna array (44, 51) is arranged in such a way that it transmits signals to the second virtual antenna array (57), and
**in that** the second virtual antenna array (57) is arranged in such a way that it transmits signals to the second party (53).

4. Measuring system according to claim 3,
**characterised in that**
the first virtual antenna array (44, 51) and/or the second virtual antenna array (57) are configured in such a way that an existing communication connection from a virtual antenna array (44, 51, 57) or a party to the object to be measured (42, 52) can be transferred to a further virtual antenna array (44, 51, 57) or to a further party (40, 41, 53), and
**in that** the processing device (36) measures the performance of the object to be measured (42, 52) during the transfer.

5. Measuring system according to one of claims 1 to 4,
**characterised in that**
the object to be measured can be reconfigured during an existing communication connection from a part of the first virtual antenna array to a mobile station or base station which is not part of a virtual antenna array, and **in that** the processing device (36) is capable of measuring the performance of the object to be measured during the reconfiguration.

6. Measuring system according to one of claims 1 to 5,
**characterised in that**
the object to be measured has at least two antennas for transmitting or receiving identical or different signals, and
**in that** the processing device (36) is capable of checking the reception or the transmission of the signals.

7. Measuring method for measuring an object to be measured (42, 52),
wherein the object to be measured (42, 52) is a mobile station,
wherein a first virtual antenna array (44, 51) consists of at least two mobile stations (45, 46, 58, 59), wherein the first virtual antenna array (44, 51) comprises the object to be measured (42, 52),
wherein signals are transmitted to the first virtual antenna array (44, 51),
wherein the first virtual antenna array (44, 51) transmits signals at least indirectly, and
wherein signals transmitted to the object to be measured (42, 52) and signals transmitted from the object to be measured (42, 52) are compared,
**characterised in that**
the processing device (36) controls parties of the virtual antenna array (30, 31, 32, 33) so that these transmit signals to or receive signals from the object to be measured,
**in that** an at least partially real transmission channel is simulated at least on a signal transmission path between two parties and/or between a virtual antenna array and a party and/or between two virtual antenna arrays (51, 57) by adding noise and/or fading, and
**in that** a channel simulation device (60) can be used on a plurality of connections or all the connections.

8. Measuring method according to claim 7,
**characterised in that**
the first virtual antenna array (44, 51) transmits signals to a second virtual antenna array (57).

9. Measuring method according to claim 7 or 8,
**characterised in that**
an existing communication connection from a virtual antenna array or a party to the object to be measured is transferred to a further virtual antenna array or a further party, and
**in that** the performance of the object to be measured is measured during the transfer.

10. Measuring method according to one of claims 7 to 9,
**characterised in that**
the object to be measured is reconfigured during an existing communication connection from a part of the first virtual antenna array to a mobile station or base station which is not part of a virtual antenna array, and **in that** the performance of the object to be measured is measured during the reconfiguration.

11. Measuring method according to one of claims 7 to 10,
**characterised in that**
the object to be measured has at least two antennas,
**in that** identical or different signals are received or transmitted by means of the at least two antennas of the object to be measured, and
**in that** the reception or transmission of the signals is checked.

## Revendications

1. Système de mesure pour mesurer un objet à mesurer (42, 52) comportant un premier participant (40), un second participant (41, 53), un premier réseau d'antennes virtuel (44, 51) et un dispositif de traitement (36),
dans lequel l'objet à mesurer (42, 52) est une station mobile,
dans lequel le premier réseau virtuel d'antennes (44, 51) est constitué d'au moins deux stations mobiles (44, 45, 46, 51, 50, 59),
dans lequel le premier réseau virtuel d'antennes (44, 51) comporte l'objet à mesurer (42, 52),
dans lequel le premier participant (40) est disposé de sorte qu'il envoie des signaux au premier réseau virtuel d'antennes (44, 51),
dans lequel le premier réseau virtuel d'antennes (44, 51) est réalisé de sorte qu'il envoie au moins indirectement des signaux au second participant (41, 53), et
dans lequel le dispositif de traitement (36) est réalisé de sorte qu'il compare les signaux envoyés à l'objet à mesurer (42, 52) et les signaux envoyés par l'objet à mesurer (42, 52)
**caractérisé en ce que**
l'unité de traitement (36) est réalisée pour commander les participants du réseau virtuel d'antennes (30, 31, 32, 33), de sorte que ceux-ci envoient des signaux à l'objet à mesurer ou reçoivent des signaux,
**en ce que** le système de mesure comporte en outre au moins un dispositif de simulation de canal (60), et
**en ce que** le dispositif de simulation de canal (60) est réalisé pour simuler un canal de transmission au moins partiellement réel grâce à l'ajout de bruits et/ou de fading au moins sur un tronçon de transmission de signal entre deux participants et/ou entre un réseau virtuel d'antennes et un participant et/ou entre deux réseaux virtuels d'antennes (51, 57) et une utilisation du dispositif de simulation de canal (60) est possible sur plusieurs liaisons ou sur la totalité des liaisons.

2. Système de mesure selon la revendication 1, **caractérisé en ce que**
le premier participant (40) est une station de base et le second participant (41, 53) est une station mobile, ou
**en ce que** le premier participant (40) est une station mobile et le second participant (41, 53) est une station de base.

3. Système de mesure selon la revendication 1 ou 2, **caractérisé en ce que**
le premier réseau virtuel d'antennes (44, 51) est relié à un second réseau virtuel d'antennes (57),
**en ce que** le premier réseau virtuel d'antennes (44, 51) est disposé de sorte qu'il envoie des signaux au second réseau virtuel d'antennes (57), et
**en ce que** le second réseau virtuel d'antennes (57) est disposé de sorte qu'il envoie des signaux au second participant (53).

4. Système de mesure selon la revendication 3, **caractérisé en ce que**
le premier réseau virtuel d'antennes (44, 51) et/ou le second réseau virtuel d'antennes (57) sont configurés de sorte qu'une liaison de communication existante peut être transmise par un réseau virtuel d'antennes (44, 51, 57) ou par un participant à l'objet à mesurer (42, 52) à un autre réseau virtuel d'antennes (44, 51, 57) ou à un autre participant (40, 41, 53), et
**en ce que** le dispositif de traitement (36) mesure le comportement de l'objet à mesurer (42, 52) pendant la transmission.

5. Système de mesure selon l'une des revendications 1 à 4,
**caractérisé en ce que**
l'objet à mesurer peut être reconfiguré pendant une liaison de communication existante par un élément du premier réseau virtuel d'antennes à une station mobile ou une station de base, qui n'est pas un élément d'un réseau virtuel d'antennes, et
**en ce que** le dispositif de traitement (36) est approprié pour mesurer le comportement de l'objet à mesurer pendant la reconfiguration.

6. Système de mesure selon l'une des revendications 1 à 5,
**caractérisé en ce que**
l'objet à mesurer dispose d'au moins deux antennes pour envoyer ou recevoir des signaux identiques ou différents,
et **en ce que** le dispositif de commande (36) est approprié pour vérifier la réception ou l'envoi des signaux.

7. Procédé de mesure pour mesurer un objet à mesurer (42, 52),
dans lequel l'objet à mesurer (42, 52) est une station mobile,
dans lequel un premier réseau virtuel d'antennes (44, 51) est constitué d'au moins deux stations mobiles (45, 46, 58, 59),
dans lequel le premier réseau virtuel d'antennes (44, 51) comporte l'objet à mesurer (42, 52),
dans lequel des signaux sont envoyés au premier réseau virtuel d'antennes (44, 51),
dans lequel le premier réseau virtuel d'antennes (44, 51) envoie au moins indirectement des signaux, et
dans lequel des signaux envoyés à l'objet à mesurer (42, 52) et envoyés par l'objet à mesurer (42, 52 sont comparés
**caractérisé en ce que**
l'unité de traitement (36) commande les participants du réseau virtuel d'antennes (30, 31, 32, 33), **en ce que** ceux-ci envoient des signaux à l'objet à mesurer ou reçoivent des signaux,
**en ce qu'**au moins un canal de transmission au moins partiellement réel est simulé au moins sur un tronçon de transmission de signaux entre deux participants et/ou entre un réseau virtuel d'antennes et un participant et/ou entre deux réseaux virtuels d'antennes (51, 57) par ajout de bruits et/ou de fading et une utilisation d'un dispositif de simulation de canal (60) est possible sur plusieurs liaisons ou sur la totalité des liaisons.

8. Procédé de mesure selon la revendication 7, **caractérisé en ce que**
le premier réseau virtuel d'antennes (44, 51) envoie des signaux à un second réseau virtuel d'antennes (57).

9. Procédé de mesure selon la revendication 7 ou 8, **caractérisé en ce que**
une liaison de communication existante est transmise par un réseau virtuel d'antennes ou par un participant à l'objet à mesurer à un autre réseau virtuel d'antennes ou à un autre participant, et
**en ce que** le comportement de l'objet à mesurer est mesuré pendant la transmission.

10. Procédé de mesure selon l'une des revendications 7 à 9,
**caractérisé en ce que**
l'objet à mesurer peut être reconfiguré pendant une liaison de communication existante par un élément du premier réseau virtuel d'antennes à une station mobile ou une station de base, qui n'est pas un élément d'un réseau virtuel d'antennes, et
**en ce que** le comportement de l'objet à mesurer est mesuré pendant la reconfiguration.

11. Procédé de mesure selon l'une des revendications 7 à 10,
**caractérisé en ce que**
l'objet à mesurer dispose d'au moins deux antennes,
**en ce que** des signaux identiques ou différents sont reçus ou envoyés grâce à au moins deux antennes de l'objet à mesurer, et
**en ce que** la réception ou l'envoi des signaux est vérifié(e).
